# EUROPÄISCHE PATENTANMELDUNG

(11) **EP 4 817 482 A1**
(43) Veröffentlichungstag der Anmeldung: **07.10.2026**
(21) Anmeldenummer: 26161923.3
(22) Anmeldetag: 03.03.2026
(51) Int. Cl.: A47J 42/46, A47J 42/16

(54) **MAHLWERK UND KAFFEEAUTOMAT**

(30) Priorität: 31.03.2025 DE 202025101763 U
(71) Anmelder: BSH Hausgeräte GmbH, 81739 München (DE)
(72) Erfinder: Mitterreiter, Sabine, 83339 Chieming (DE); Schreiner, Thomas, 84544 Aschau am Inn (DE); Jäger, Harald, 83349 Palling (DE)

(57) **Zusammenfassung**

Die vorliegende Erfindung betrifft Mahlwerk (1), eingerichtet zum Einbau in einen Kaffeeautomaten (2), mit einem Mahlwerksgehäuse (3) und einer Antriebseinrichtung (4), wobei ein Kraft- und/oder Formschlusselement (5) zur Fixierung der Antriebseinrichtung (4) gegenüber dem Mahlwerksgehäuse (3) vorgesehen ist und zwischen dem Mahlwerksgehäuse (3), der Antriebseinrichtung (4) und/oder dem Kraft- und/oder Formschlusselement (5) ein Toleranzausgleichsmittel (6) vorgesehen ist - sowie einen Kaffeeautomaten (2) mit einem solchen Mahlwerk (1).

## Beschreibung

Die vorliegende Erfindung betrifft ein Mahlwerk, eingerichtet zum Einbau in einen Kaffeeautomaten, mit einem Mahlwerksgehäuse und einer Antriebseinrichtung - und einen Kaffeeautomaten mit einem dementsprechenden Mahlwerk.

Es ist bekannt, dass Mahlwerke, die zum Einbau in Kaffeeautomaten eingerichtet sind, ein Mahlwerksgehäuse und eine Antriebseinrichtung umfassen. Die Antriebseinrichtung ist dabei regelmäßig ein Antriebsmotor, der an das Mahlwerksgehäuse montiert ist. Dies kann z.B. durch anschrauben oder einschnappen des Antriebsmotors an/in das Mahlwerksgehäuse erfolgen.

Nachteilig bei einer Schraubmontage ist der vergleichsweise hohe Montageaufwand und bei der Schnappmontage die ggf. hohen auf die Schnappeinrichtung wirkenden Kräfte. Ein über die Lebensdauer und trotz auftretender Fertigungstoleranzen sicherer Halt des Antriebsmotors am Mahlwerksgehäuse wird daher häufig durch eine sehr robust ausgelegte Schnappeinrichtung sichergestellt, die wiederum eine Montage erschwert.

Aufgabe der vorliegenden Erfindung ist es daher, die genannten Nachteile zu verbessern, insbesondere eine vorteilhafte Ausführungsform anzugeben und ganz besonders, trotz auftretender Fertigungstoleranzen eine einfache und dennoch robuste Montage der Antriebseinrichtung am Mahlwerksgehäuse zu ermöglichen.

Diese Aufgabe wird durch den Gegenstand von Anspruch 1 gelöst sowie auch durch den Gegenstand des Anspruchs 10. Vorteilhafte Weiterbildungen der Erfindung sind Gegenstand der abhängigen Ansprüche.

Ein erfindungsgemäßes Mahlwerk ist eingerichtet zum Einbau in einen Kaffeeautomaten und umfasst ein Mahlwerksgehäuse und eine Antriebseinrichtung, wobei ein Kraft- und/oder Formschlusselement zur Fixierung der Antriebseinrichtung gegenüber dem Mahlwerksgehäuse vorgesehen ist und zwischen dem Mahlwerksgehäuse, der Antriebseinrichtung und/oder dem Kraft- und/oder Formschlusselement ein Toleranzausgleichsmittel vorgesehen ist. Dadurch können die Nachteile der bekannten Lösungen verbessert oder überwunden werden, insbesondere kann somit eine vorteilhafte Ausführungsform angegeben werden. Speziell kann nunmehr, trotz auftretender Fertigungstoleranzen eine einfache und dennoch robuste Montage der Antriebseinrichtung am Mahlwerksgehäuse zu ermöglicht werden. Durch das Toleranzausgleichsmittel kann nicht nur der hohe Montageaufwand einer Schraubmontage und die hohen auf die Schnappeinrichtung wirkenden Kräfte reduziert werden. Denn das Toleranzausgleichsmittel kann auch bei niedrigeren auf die Schnappeinrichtung wirkenden Kräfte sicherstellen, dass die Schnappeinrichtung über die gesamte Lebensdauer die erforderliche Haltekraft aufbringt, ohne dass die Schnappeinrichtung selbst sehr robust und wiederum eine Montage erschwerend ausgelegt werden muss. Darüber hinaus ermöglicht das Toleranzausgleichsmittel bei erfindungsgemäßer Anordnung, dass auch ein ungünstiges Zusammenspiel verschiedener Fertigungstoleranzen eine Geräuschemission des Mahlwerks nicht negativ beeinflusst oder sogar verbessert. Somit kann bei sehr geringem Montageaufwand eine sichere und sogar geräuschoptimierte Fixierung der Antriebseinrichtung gegenüber dem Mahlwerksgehäuse erreicht werden.

Bei einer vorteilhaften Weiterbildung der erfindungsgemäßen Lösung ist vorgesehen, dass das Kraft- und/oder Formschlusselement bügelförmig eine dem Mahlwerksgehäuse abgewandte Fläche der Antriebseinrichtung, zumindest teilweise, umgreift. Dadurch kann besonders einfach und in der Herstellung leicht umsetzbare Anordnung des Toleranzausgleichsmittels zwischen dem Mahlwerksgehäuse, der Antriebseinrichtung und/oder dem Kraft- und/oder Formschlusselement erreicht werden.

Bei einer weiteren vorteilhaften Weiterbildung der erfindungsgemäßen Lösung ist vorgesehen, dass das Formschlusselement eine Rasteinrichtung umfasst. Dadurch kann die Montage des Formschlusselements zusammen mit dem Toleranzausgleichsmittel besonders einfach ermöglicht werden.

Bei einer weiteren vorteilhaften Weiterbildung der erfindungsgemäßen Lösung ist vorgesehen, dass das Toleranzausgleichsmittel an dem Kraft- und/oder Formschlusselement vorgesehen ist. Dies ermöglicht eine besonders einfache Montage des Toleranzausgleichsmittels gegenüber dem Mahlwerksgehäuse zusammen mit dem Formschlusselement.

Bei einer weiteren vorteilhaften Weiterbildung der erfindungsgemäßen Lösung ist vorgesehen, dass das Toleranzausgleichsmittel an einem bügelförmig die Fläche der Antriebseinrichtung umgreifenden Abschnitt befestigt ist. Dies ermöglicht einen besonders wirkungsvollen Toleranzausgleich.

Bei einer weiteren vorteilhaften Weiterbildung der erfindungsgemäßen Lösung ist vorgesehen, dass das Toleranzausgleichsmittel einstückig mit dem Kraft- und/oder Formschlusselement hergestellt ist. Dadurch können nicht nur Bauteilkosten eingespart werden, sondern auch das Toleranzausgleichsmittel verliersicher bereitgestellt werden.

Bei einer weiteren vorteilhaften Weiterbildung der erfindungsgemäßen Lösung ist vorgesehen, dass das Toleranzausgleichsmittel aus einer Weichkomponente, insbesondre Silikon, Kautschuk, NBR oder EPDM hergestellt ist. Dadurch kann diese Lösung besonders günstig, zugfest, schmiermittelresistent oder Klimabeständig bereitgestellt werden.

Bei einer weiteren vorteilhaften Weiterbildung der erfindungsgemäßen Lösung ist vorgesehen, dass Toleranzausgleichsmittel 6 eine Härte von 30 bis 90 Shore A aufweist, insbesondere 45 bis 70 Shore A. Über die im Bereich von 30 bis 90 Shore A für verschiedene Kraft- und/oder Formschlussverbindungen vorteilhaften Toleranzausgleichseigenschaften hinaus, ermöglichen 45 bis 70 Shore A einen überraschend positiven Einfluss auf die Geräuschemission des Mahlwerks.

Bei einer weiteren vorteilhaften Weiterbildung der erfindungsgemäßen Lösung ist vorgesehen, dass das Toleranzausgleichsmittel einen kugel-, ring-, pilz, zylinder-, kegel-, pyramiden-, tetraeder-, und/oder quaderförmigen Abschnitt aufweist. Dadurch können für verschiedenste Anordnungssituationen besonders vorteilhafte Toleranzausgleichseigenschaften ermöglicht werden.

Die eingangs genannten Aufgabe wird auch durch einen Kaffeeautomaten mit einem Mahlwerk gemäß der vorhergehenden Beschreibung gelöst. Dadurch kommen die vorgenannten Vorteile in einem besonders erheblichen Maße zur Geltung.

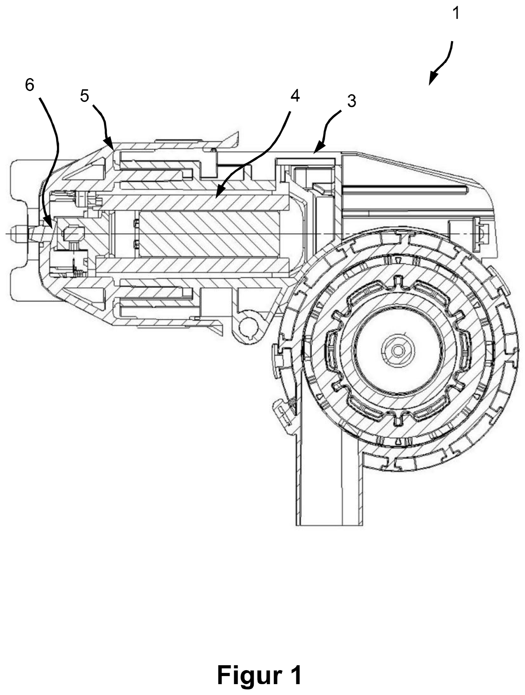

Weitere Vorteile und vorteilhafte Ausgestaltungen ergeben sich aus der im Folgenden in Verbindung mit der einzigen Figur 1 beschriebenen Ausführungsform. Es zeigt:
- Figur 1: ein Mahlwerk mit einem Mahlwerksgehäuse und einer Antriebseinrichtung, eingerichtet zum Einbau in einen Kaffeeautomaten, und
- Figur 2: einen Kaffeeautomaten mit einem solchen Mahlwerk.

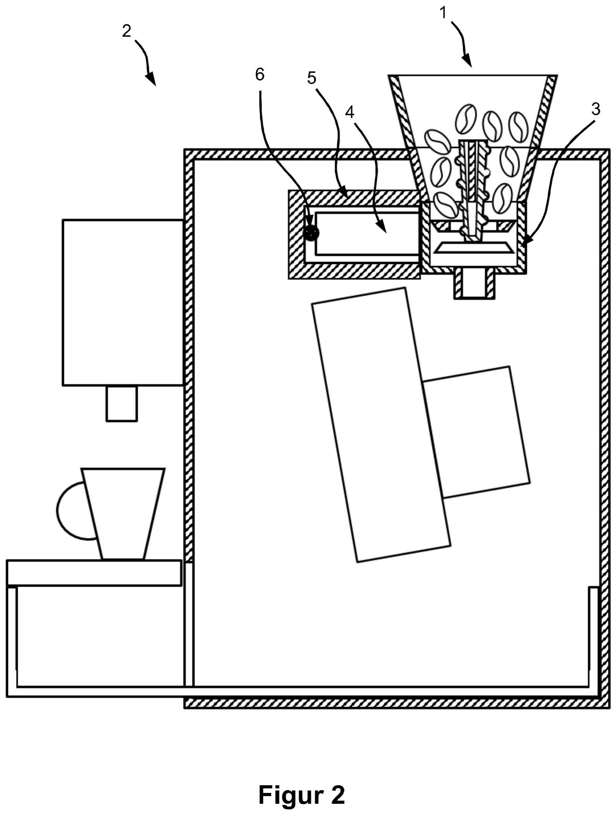

In Figur 1 ist ein Mahlwerk 1 mit einem Mahlwerksgehäuse 3 und einer Antriebseinrichtung 4 zu erkennen, das zum Einbau in einen Kaffeeautomaten 2 eingerichtet ist, wobei der Kaffeeautomat 2 in Figur 2 dargestellt ist.

Das zum Einbau in den Kaffeeautomaten 2 eingerichtete Mahlwerk 1 umfasst ein Mahlwerksgehäuse 3 und einer Antriebseinrichtung 4. Zur Fixierung der Antriebseinrichtung 4 gegenüber dem Mahlwerksgehäuse 3 ist ein Kraft- und Formschlusselement 5 vorgesehen. Dabei ist zwischen der Antriebseinrichtung 4 und dem Kraft- und Formschlusselement 5 ein Toleranzausgleichsmittel 6 vorgesehen. Das Kraft- und Formschlusselement 5 umgreift bügelförmig eine dem Mahlwerksgehäuse 3 abgewandte Fläche der Antriebseinrichtung 4. Das Formschlusselement 5 umfasst eine Rasteinrichtung, die mit einer Gegenrasteinrichtung am Mahlwerksgehäuse 3 in Eingriff gebracht ist. Dabei zeigt Figur 1 eine spezifische Ausführungsform des Toleranzausgleichsmittels 6 detailliert, wohingegen es in Figur 2 lediglich schematisch dargestellt ist.

Das Toleranzausgleichsmittel 6 ist an dem Kraft- und Formschlusselement 5 vorgesehen ist und an einem bügelförmig die Fläche der Antriebseinrichtung 4 umgreifenden Abschnitt befestigt. Im vorliegenden Beispiel ist das Toleranzausgleichsmittel 6 nicht einstückig mit dem Kraft- und/oder Formschlusselement 5 hergestellt, sondern separat aus einer Weichkomponente, hier EPDM hergestellt. Es weist eine Härte von 55 Shore A und zwei kegelförmige sowie einen zylindrischen Abschnitt auf. Es kann in ein zylindrisches Loch im Kraft- und Formschlusselement 5 eingesetzt werden, indem ein kleinerer der beiden kegelförmigen Abschnitte durch das Loch geführt wird und dann der zylindrische Abschnitt im zylindrischen Loch sitzt und dort von dem kleineren kegelförmigen Abschnitt gehalten wird. Der größere als Kegelstumpf ausgebildete kegelförmige Abschnitt liegt an der Fläche der Antriebseinrichtung 4 an und bewirkt den Toleranzausgleich. Auf beiden Seiten des zylindrischen Abschnitts ist das Toleranzausgleichsmittel 6 demgemäß als Kegelstumpf ausgebildet.

Dadurch können die eingangs genannten Nachteile verbessert werden. Insbesondere ist eine vorteilhafte Ausführungsform angegeben, bei der trotz auftretender Fertigungstoleranzen eine einfache und dennoch robuste Montage der Antriebseinrichtung 4 am Mahlwerksgehäuse 3 ermöglicht wird. Darüber hinaus kann bei sehr geringem Montageaufwand eine sichere und sogar geräuschoptimierte Fixierung der Antriebseinrichtung 4 gegenüber dem Mahlwerksgehäuse 3 erreicht werden.

Die im Ausführungsbeispiel dargestellten Bestandteile wie z. B. das Mahlwerksgehäuse 3 und die Antriebseinrichtung 4 sowie deren Größenverhältnisse zueinander sind grundsätzlich nicht als maßstabsgerecht anzusehen. Vielmehr können einzelne Elemente wie beispielsweise das Toleranzausgleichsmittel 6 zur besseren Darstellbarkeit und/oder zum besseren Verständnis übertrieben dick oder groß dimensioniert dargestellt sein. Die Erläuterung des erfindungsgemäßen Mahlwerks 1 und des Toleranzausgleichsmittels 6 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Patentansprüchen oder den Ausführungsbeispielen angegeben ist.

### BEZUGSZEICHENLISTE

- 1: Mahlwerk
- 2: Kaffeeautomat
- 3: Mahlwerksgehäuse
- 4: Antriebseinrichtung
- 5: Kraft- und/oder Formschlusselement
- 6: Toleranzausgleichsmittel

## Patentansprüche

1. Mahlwerk (1), eingerichtet zum Einbau in einen Kaffeeautomaten (2), mit einem Mahlwerksgehäuse (3) und einer Antriebseinrichtung (4), wobei ein Kraft- und/oder Formschlusselement (5) zur Fixierung der Antriebseinrichtung (4) gegenüber dem Mahlwerksgehäuse (3) vorgesehen ist und zwischen dem Mahlwerksgehäuse (3), der Antriebseinrichtung (4) und/oder dem Kraft- und/oder Formschlusselement (5) ein Toleranzausgleichsmittel (6) vorgesehen ist.

2. Mahlwerk (1) nach Anspruch 1, **dadurch gekennzeichnet, dass** das Kraft- und/oder Formschlusselement (5) bügelförmig eine dem Mahlwerksgehäuse (3) abgewandte Fläche der Antriebseinrichtung (4) zumindest teilweise umgreift.

3. Mahlwerk (1) nach Anspruch 1 oder 2, **dadurch gekennzeichnet, dass** das Formschlusselement (5) eine Rasteinrichtung umfasst.

4. Mahlwerk (1) nach einem der Ansprüche 1 bis 3, **dadurch gekennzeichnet, dass** das Toleranzausgleichsmittel (6) an dem Kraft- und/oder Formschlusselement (5) vorgesehen ist.

5. Mahlwerk (1) nach einem der Ansprüche 2 bis 4, **dadurch gekennzeichnet, dass** Toleranzausgleichsmittel (6) an einem bügelförmig die Fläche der Antriebseinrichtung (4) umgreifenden Abschnitt befestigt ist.

6. Mahlwerk (1) nach einem der Ansprüche 1 bis 5, **dadurch gekennzeichnet, dass** das Toleranzausgleichsmittel (6) einstückig mit dem Kraft- und/oder Formschlusselement (5) hergestellt ist.

7. Mahlwerk (1) nach einem der der Ansprüche 1 bis 5, **dadurch gekennzeichnet, dass** das Toleranzausgleichsmittel (6) aus einer Weichkomponente, insbesondre Silikon, Kautschuk, NBR oder EPDM hergestellt ist.

8. Mahlwerk (1) nach Anspruch 7, **dadurch gekennzeichnet, dass** Toleranzausgleichsmittel (6) eine Härte von 30 bis 90 Shore A aufweist, insbesondere 45 bis 70 Shore A.

9. Mahlwerk (1) nach einem der Ansprüche 1 bis 8, **dadurch gekennzeichnet, dass** das Toleranzausgleichsmittel (6) einen kugel-, ring-, pilz, zylinder-, kegel-, pyramiden-, tetraeder-, und/oder quaderförmigen Abschnitt aufweist.

10. Kaffeeautomat (2) mit einem Mahlwerk (1) nach einem der Ansprüche 1 bis 9.
